# EUROPEAN PATENT SPECIFICATION

(11) **EP 1 952 919 B1**
(45) Date of publication and mention of the grant of the patent: **24.04.2013**
(21) Application number: 08001900.3
(22) Date of filing: 01.02.2008
(51) Int. Cl.: B22F 9/24, B22F 1/00

(54) **Magnetic nanoparticles and aqueous colloid composition containing the same**
Magnetische Nanoteilchen und diese enthaltende wässrige Kolloidzusammensetzung
Nanoparticules magnétiques et composition colloïde aqueuse les contenant

(30) Priority: 02.02.2007 JP 2007023930; 02.02.2007 JP 2007023931
(43) Date of publication of application: 06.08.2008
(73) Proprietor: FUJIFILM Corporation, Tokyo 106-0031 (JP)
(72) Inventor: Hirai, Hiroyuki, Ashigarakami-gun, Kanagawa 258-8577 (JP); Aikawa, Kazuhiro, Ashigarakami-gun, Kanagawa 258-8577 (JP); Kasahara, Takehiro, Kanagawa 250-0193 (JP); Matsui, Takashi, Kanagawa 250-0193 (JP)
(74) Representative: HOFFMANN EITLE

(56) References cited:
- O'CONNOR C.J.; SIMS J.A.; KUMBHAR A.; KOLESNICHENKO V.L.; ZHOU W.L.; WIEMANN J.A.: "Magnetic properties of FePtx/Au and CoPtx/Au core-shell nanoparticles" JOURNAL OF MAGNETISM AND MAGNETIC MATERIALS, vol. 226-230, 2001, pages 1915-1917, XP002514245
- B RAVEL, EE CARPENTER, VG HARRIS: "Oxidation of iron in iron/gold core/shell nanoparticles" JOURNAL OF APPLIED PHYSICS, vol. 91, no. 10, 15 May 2002 (2002-05-15), pages 8195-8197, XP002514246
- J LIN, W ZHOU, A KUMBHAR, J WIEMANN, J FANG, EE CARPENTERB AND C. J. O'CONNOR: "Gold-Coated Iron (Fe@Au) Nanoparticles: Synthesis, Characterization, and Magnetic Field-Induced Self-Assembly" JOURNAL OF SOLID STATE CHEMISTRY, vol. 159, no. 1, June 2001 (2001-06), pages 26-31, XP002514247
- HITESH G. BAGARIA, EARL T. ADA, MOHAMMED SHAMSUZZOHA, DAVID E. NIKLES, AND DUANE T. JOHNSON: "Understanding Mercapto Ligand Exchange on the Surface of FePt Nanoparticles" LANGMUIR, vol. 22, no. 18, 29 July 2006 (2006-07-29), pages 7732-7737, XP002514248
- Y ZHANG, N KOHLER, M ZHANG: "Surface modification of superparamagnetic magnetite nanoparticles and their intracellular uptake" BIOMATERIALS, vol. 23, no. 4, April 2002 (2002-04), pages 1553-1561, XP002514249
- EE CARPENTER, JA SIMS, JA WIENMANN, WL ZHOU, CJ O'CONNOR: "Magnetic properties of iron and iron platinum alloys synthesized via microemulsion techniques" JOURNAL OF APPLIED PHYSICS, vol. 87, no. 9, 1 May 2000 (2000-05-01), pages 5615-5617, XP002514250
- BL CUSHING, VL KOLESNICHENKO, CJ O CONNOR: "Recent Advances in the Liquid-Phase Syntheses of Inorganic Nanoparticles" CHEMICAL REVIEWS, vol. 104, 20 August 2004 (2004-08-20), pages 3893-3946, XP002514251

## Description

### Technical Field

The present invention relates to a magnetic nanoparticle and to an aqueous colloid composition containing the same. More particularly, the present invention relates to a magnetic nanoparticle containing an iron alloy, or a nanoparticle containing platinum and/or gold in addition to iron oxide, and to an aqueous composition containing any of these nanoparticles. Still further, the present invention relates to an imaging agent and/or a formulation for thermotherapy which contain any of the aforementioned magnetic particles.

### Background Art

The application of magnetic microparticles in the field of medical treatment has been anticipated in recent years. Techniques relating to magnetic microparticles permitting their application to living organisms by dispersion in aqueous solutions have been reported, such as a microparticle in the form of a ferromagnetic metal oxide compound such as ferrite coated with an aqueous polymer compound (see WO 95/31220) and a metal microparticle complex comprised of a zero valence transition metal microparticle and a nonionic hydrophilic ligand (see Japanese Unexamined Patent Publication (KOKAI) Heisei No. 10-330288). The former is described as being useful as an MRI imaging agent and the latter as an X-ray or MRI imaging agent.

Further, Japanese Unexamined Patent Publication (KOKAI) Heisei No. 2-174720 (WO 90/01939) discloses that complexes comprised of dextran and magnetic ultramicroparticles of a metal or a metal compound efficiently generate heat in an alternating magnetic field, and that compositions comprised chiefly of these complexes are good as an agent for thermotherapies of malignant tumors and the like.

CuAu-type and Cu₃Au-type alloy magnetic nanoparticles having a single magnetic region structure and a particle size on the nanometer order have recently attracted attention as candidate materials for application to high-density magnetic recording. Japanese Unexamined Patent Publication (KOKAI) No. 2005-48213 suggests the application of such alloy magnetic nanoparticles to the field of medical treatment, but does not disclose any example of actual application to a living organism or describe any specific application.

Ideally, it would be possible to identify affected areas by X-ray examination or MRI examination and simultaneously treat them with magnetic microparticles or nanoparticles. However, no such reports have yet been made. Further, from the perspective of reducing side effects, the development of a material composition permitting highly sensitive detection and highly efficient thermotherapy when administered in small quantities is desirable.

C. J. O'Connor et al. (Journal of Magnetism and Magnetic Materials, Vol. 226-230, 2001, pages 1915-1917) mentions the magnetic properties of FePtₓ/Au and CoPtₓ/Au core-shell nanoparticles. The oxidation of iron in iron/gold core/shell nanoparticles is described in B. Ravel et al. (Journal of Applied Physics, Vol. 91, No. 10, 2002, pages 8195-8197). W. Zhou et al. (Journal of Solid State Chemistry, Vol. 159, 2001, pages 26-31) relates to a reverse micelle method for the preparation of gold-coated iron (Fe@Au) nanoparticles. The ligand exchange on the surface of FePt nanoparticles with mercapto ligands is concerned in H. G. Bagaria et al. (Langmuir, Vol. 22, pages 7732-7737). The surface modification of superparamagnetic magnetite nanoparticles and their intracellular uptake are described in Y. Zhang et al. (Biomaterials, Vol. 23, 2002, pages 1553-1561). E. E. Carpenter et al. (Journal of Applied Physics, Vol. 87, No. 9, 2000, pages 5615-5617) relates to the magnetic properties of iron and iron platinum alloys synthesized via microemulsion techniques and their magnetical characterization. B. L. Cushing et al. (Chemical Reviews, Vol. 104, 2004, pages 3893-3946) mentions several methods for the liquid-phase syntheses of inorganic nanoparticles.

### Disclosure of the Invention

An object of the present invention is to provide an aqueous colloid composition comprising a magnetic nanoparticle which affords excellent stability in electrolytic aqueous solutions such as blood or water. The magnetic nanoparticle comprises an iron alloy in addition to iron oxide that is highly safe, or platinum and/or gold in addition to iron oxide. A further object is providing a method of manufacturing said aqueous colloid composition. Another object of the present invention is providing a formulation for thermotherapy affording high thermal efficiency as well as providing an imaging agent. The formulation for thermotherapy and the imaging agent comprise the aqueous colloid composition of the present invention. In particular, the aqueous colloid composition, the method of manufacturing said aqueous colloid composition, the imaging agent and the formulation for thermotherapy are defined as in the appended claims.

The aqueous colloid composition of the present invention further can be used for the manufacturing of a formulation for thermotherapy or an imaging agent such as an MRI imaging agent or an X-ray imaging agent; in an imaging method, such as MRI imaging or X-ray imaging, comprising the steps of administering the above-described aqueous colloid composition to a mammal, including a human, and then producing an image; and a thermotherapy comprising the step of administering the above-described aqueous colloid composition to a mammal, including a human.

### Brief Description of the Drawings

Fig. 1 shows a TEM photograph of magnetic nanoparticles in the aqueous colloid composition obtained in Example 1.
Fig. 2 shows MRI images prior to (left) and 20 minutes after (right) intravenous administration of 0.5 mL/kg of the aqueous colloid composition obtained in Example 1 to a rat.
Fig. 3 shows a TEM photograph of the aqueous colloid composition obtained in Example 3.
Fig. 4 shows a TEM photograph of magnetic nanoparticles in the aqueous colloid composition obtained in Example 4.
Fig. 5 shows MRI images prior to (left) and 20 minutes after (right) intravenous administration of 0.5 mL/kg of the aqueous colloid composition obtained in Example 4 to a rat.
Fig. 6 shows TEM photographs of the aqueous colloid composition obtained in Example 6. The photograph on the right is an enlargement of the photograph on the left.

### Best Modes of Implementing the Invention

The present invention is described in detail below.

In the present specification, ranges indicated with "to" is used to mean ranges including the numbers before and after "to" as the minimum and maximum values.

### The magnetic nanoparticle

The magnetic nanoparticles comprised in the aqueous colloid composition of the present invention are characterized by stably dispersing in water and in electrolytic aqueous solutions such as blood. They permit high-contrast imaging and an enhanced heating effect in an alternating magnetic field by accumulating at targets sites such as cancers. Further, the magnetic nanoparticles can be safely administered to living organisms and present few side effects.

The mean particle size of the magnetic nanoparticles is 1 to 20 nm. Particle size can be determined by transmission electron microscopy (TEM) as set forth further below. The term "particle size" means the diameter of the image of a magnetic nanoparticle obtained by electron microscope photography when converted to a circle of identical area.

The magnetic nanoparticle which comprises iron alloy in addition to iron oxide (abbreviated as iron alloy-containing magnetic nanoparticle) and is comprised in the aqueous colloid composition of the present invention) preferably has a mean particle size of not less than 1 nm and less than 5 nm. Further, the magnetic nanoparticle containing platinum and/or gold in addition to iron oxide preferably has a mean particle size of not less than 5 nm and not greater than 20 nm.

In the specification, the coercivity of the magnetic nanoparticle is indicated in the value obtained by measuring the magnetic nanoparticle in a state of solid by the ordinary procedure well known in the art wherein a vibrating sample magnetometer (VSM) is used. The coercivity of the magnetic nanoparticles is not greater than 16 KA/m (about 200 Oe), preferably not less than 0.001 KA/m and not greater than 16 KA/m, more preferably not less than 0.1 KA/m and and not greater than 16 KA/m, further preferably not less than 0.1 KA/m and not greater than 12 KA/m. When the coercivity of the magnetic nanoparticles is greater than 16 KA/m, the magnetic nanoparticles sometimes tend to aggregate. The saturation magnetization per kilogram of iron contained in the magnetic electromagnetic particles of the present invention is preferably not less than 10 A · m²/kg and not greater than 200 A · m²/kg; that is, the saturation magnetization per gram of iron is preferably not less than 10 emu and not greater than 200 emu, preferably not less than 20 A · m²/kg and not greater than 150 A · m²/kg. When the saturation magnetization is less than 10 A · m²/kg, magnetic responsiveness may be inadequate when employed as an imaging agent or thermotherapy formulation.

The iron alloy-containing magnetic nanoparticle can be in an amorphous state, in a superparamagnetic state (fcc) in which the magnetic moment orientation is irregular, or in a regular alloyed ferromagnetic state (fct) achieved by annealing or the like. However, from the perspective of dispersion stability, a superparamagnetic state or amorphous state is preferred.

In the magnetic nanoparticle containing platinum and/or gold in addition to iron oxide, superparamagnetism or soft magnetism in which the magnetic moment orientation of individual particles is irregular is desirable to enhance imaging contrast and the efficiency of heating in an alternating magnetic field.

Examples of iron alloys include Fe-Ni, Fe-Pd, Fe-Pt, Fe-Au, and Fe-Co. Among these, Fe-Pt and Fe-Au are preferable from the perspective of biosafety. Fe-Pt is most preferred due to its high saturation magnetization rate and high safety.

The elemental ratio of Fe to the other metal constituting the alloy can be a stoichiometric (crystalline state) ratio of 1:1 or 1:3, for example. However, the elemental ratio is not limited to these examples, and any range may be selected. The elemental ratio is preferably selected from the range of 3:7 to 9:1.

An oxide such as iron oxide may be formed on the outermost layer of the iron alloy to constitute the magnetic nanoparticle of the present invention.

In the magnetic nanoparticle containing platinum and/or gold in addition to iron oxide, both platinum and gold may be contained. However, preferably either platinum or gold, and more preferably platinum is contained in the magnetic nanoparticle of the present invention.

The iron oxide may be *alpha-*Fe₂O₃*, gamma-*Fe₂O*₃,* FeO, Fe₃O₄, or the like; any of these compounds may be employed. The iron oxide may be crystalline or amorphous. The iron oxide may contain metallic iron with a valence of zero, and the iron with a valence of zero may form an alloy with platinum or gold.

The structure of the magnetic nanoparticle containing platinum and/or gold in addition to iron oxide is not specifically limited. However, a core-shell structure with a core of platinum and/or gold and a coating of iron oxide over the core is preferable. The magnetic nanoparticle may be an iron oxide particle containing platinum or gold. The ratio of the content of platinum and gold to the total quantity of platinum, gold, and iron ((platinum + gold)/(iron + platinum + gold) x 100%) can be selected in accordance with the intended use, and is preferably 5 to 70 atomic percent, preferably 30 to 60 atomic percent.

The magnetic nanoparticle may be formed by a vapor-phase method, liquid-phase method, or some other known nanoparticle forming method. Among these, liquid-phase methods with good mass production properties are preferable. The solvent employed in the liquid-phase method may be an organic solvent or water, or a mixed solution of organic solvent and water. However, a nonaqueous solvent is preferred. As the nonaqueous solvent, ether-based solvents are preferred.

Examples of methods for manufacturing iron alloy-containing magnetic nanoparticles using a liquid-phase method include thermal decomposition methods, ultrasonic decomposition methods, and reducing agent reduction methods (as the reducing agents, alcohols, polyols, amino alcohols, hydrazine, sodium boron hydride, ascorbic acid, citric acid, hydrogen gas, or the like may be employed). Further, when classified by reaction system, examples of methods include coprecipitation methods, solvothermal methods, and reverse micelle methods, all of which may be employed in the present invention.

As examples of methods for manufacturing magnetic nanoparticles containing platinum and/or gold in addition to iron oxide by a liquid-phase method, a reducing agent such as an alcohol, polyol, amino alcohol, hydrazine, sodium boron hydride, ascorbic acid, citric acid, or hydrogen gas is used to form nanoparticles of platinum or gold, and iron oxide is formed using these particles as cores, or an alloy such as iron-platinum or iron-gold is formed by thermal decomposition, ultrasonic decomposition, or reduction with a reducing agent, after which at least a portion of the iron is oxidized by an oxidation treatment; these methods may be employed singly or in combination. When classified by reaction system, any coprecipitation method, solvothermal method, or reverse micelle method may be employed in the present invention. Among these, reverse micelle methods are most preferable because they afford ready control of particle size and tend to yield magnetic particles with high saturation magnetization and low coercivity. A coefficient of variation in particle size is preferably less than 20 percent, and more preferably not greater than 10 percent.

### The reverse micelle method

The reverse micelle method comprises at least (1) a reducing step in which two reverse micelle solutions are combined to conduct a reduction reaction, and (2) a curing step of curing to a prescribed temperature following the reduction reaction. Each of these steps will be described below.

### (1) The reducing step

First, a reverse micelle solution (B) is prepared by mixing a water-insoluble solution containing a surfactant and an aqueous solution containing a reducing agent.

An oil-soluble surfactant can be employed as the above surfactant. Specific examples include sulfonate types (such as Aerosol OT (manufactured by Tokyo Kasei)), quaternary ammonium salt types (such as cetyl trimethylammonium bromide), and ether types (such as pentaethylene glycoldodecyl ether). The concentration of oil-soluble surfactant in the water-insoluble solution is preferably 20 to 200 g/L.

The solvent of the water-insoluble solution is preferably a water-insoluble organic solvent. The water-insoluble organic solvent in which the surfactant is dissolved is preferably an alkane or an ether. Preferable examples of alkanes include alkanes having 7 to 12 carbon atoms; specifically, heptane, octane, nonane, decane, undecane, and dodecane. Preferable examples of ethers are diethyl ether, dipropyl ether, and dibutyl ether.

Here, the weight ratio of water to surfactant (water/surfactant) in reverse micelle solution (B) is preferably adjusted to 20 or less. A weight ratio of 20 or less is advantageous in that it inhibits precipitation and facilitates the control of particle size. The weight ratio is more preferably 15 or less, and further preferably 0.5 to 10. In addition to reverse micelle solution (B), reverse micelle solutions of different weight ratios and starting materials may be prepared and employed in combination in accordance with the intended use.

A reverse micelle solution (A) is separately prepared by combining a water-insoluble organic solvent containing a surfactant and a metal salt aqueous solution. Here, a reverse micelle comprising a platinum-containing metal salt and/or a gold-containing metal salt in addition to an iron-containing metal salt can be formed. The conditions (materials employed, concentration, and the like) of the surfactant and water-insoluble solvent are the same as for reverse micelle solvent (B). A reverse micelle solution that is identical to or different from reverse micelle solution (B) may be employed. A weight ratio of water to surfactant that is similar to that of reverse micelle solution (B) is employed in reverse micelle solution (A); the weight ratio may be identical to or different from that of reverse micelle solution (B). In addition to reverse micelle solution (A), reverse micelle solutions of different weight ratios and starting materials may be prepared and employed in combination in accordance with the intended use.

The reverse micelle solutions (A) and (B) that have been thus prepared are mixed. The mixing method is not specifically limited. In consideration of uniformity of reduction, it is preferable to admix reverse micelle solution (A) while stirring reverse micelle solution (B). Once mixing has been completed, the reduction reaction is promoted. A constant temperature within a range of -5 to 30°C is preferred. A temperature of lower than -5°C is undesirable in that the aqueous phase sometimes consolidates, creating a problem by rendering the reduction reaction nonuniform. A temperature exceeding 30°C is undesirable in that aggregation and precipitation sometimes tend to occur, rendering the system unstable. The reducing temperature is preferably 0 to 25°C, more preferably 5 to 25°C. Here, the term "constant temperature" refers to a range of T ± 3°C when the temperature setting is denoted as T (C°). Even in such cases, the upper and lower limits should be kept within the range of the above-stated reducing temperature (-5 to 30°C).

The reduction reaction period must be suitably set based on the quantity of reverse micelle solution and the like; a period of 1 to 30 minutes is preferable and 5 to 20 minutes is more preferable. When the period is less than one minute, nucleus formation is inadequate. When the period exceeds 30 minutes, the particles being to grow and the particle sizes of the magnetic nanoparticles that are produced sometimes become nonuniform.

To at least one from among reverse micelle solutions (A) and (B) is preferably added at least one dispersing agent comprising 1 to 3 amino groups, carboxyl groups, sulfonic acid groups, or sulfinic acid groups in a proportion of 0.001 to 10 moles per mole of magnetic nanoparticles being produced.

Adding such a dispersing agent yields non-aggregating magnetic nanoparticles in a dispersion of relatively monodisperse properties. When the quantity added is less than 0.001, it may become difficult to improve the monodispersive properties of the magnetic particles, and when it exceeds 10 moles, aggregation may occur.

An organic compound having a group adsorbing to the surface of the magnetic nanoparticles is preferable as the dispersing agent. Specific examples include organic compounds having 1 to 3 amino groups, carboxyl groups, sulfonic acid groups, or sulfinic acid groups. These compounds can be used singly or in combination. Preferable examples include organic compounds having 1 to 3 amino groups or carboxyl groups. The above examples include compounds represented by the structural formulas R-NH₂, NH₂-R-NH₂, NH₂-R(NH₂)-NH₂, R-COOH, COOH-R-COOH, COOH-R(COOH)-COOH, R-SO₃H, SO₃H-R-SO₃H, SO₃H-R(SO₃H)-SO₃H, R-SO₂H, SO₂H-R-SO₂H, and SO₂H-R(SO₂H)-SO₂H, wherein R represents a linear, branched, or cyclic saturated or unsaturated hydrocarbon.

As a dispersing agent, a particularly preferable compound is oleic acid. Oleic acid is preferable because it is a readily available (olive oil and the like) and inexpensive natural resource. The relative long chains of oleic acid provide an important steric hinderance that negates the strong magnetic interaction between particles. Erucic acid, linolic acid, and other similarly long-chain carboxylic acids can be employed in the same manner as oleic acid. These long-chain carboxylic acids having between 8 to 22 carbon atoms can be employed singly or in combination. Oleylamine derived from oleic acid is a dispersing agent of similar utility to oleic acid.

### (2) The curing step

Upon completion of the reduction reaction, the reaction solution is heated to the curing temperature. The curing temperature is a constant temperature of from 30 to 90°C that is set higher than the temperature of the reduction reaction. The curing period is from 5 to 180 minutes. When the curing temperature or period exceeds the given range, aggregation and precipitation tend to occur. Conversely, when they fall below the given ranges, the reaction is not completed and the composition changes. The preferable curing temperature and curing period are from 40 to 80°C and from 10 to 150 minutes, the more preferable curing temperature and curing period are from 40 to 70°C and from 20 to 120 minutes.

Here, the above-mentioned "constant temperature" is defined identically with the reduction reaction temperature (by reading "curing temperature" for "reducing temperature"). In particular, within the above-stated range (of 30 to 90°C), the curing temperature is preferably 5°C higher, more preferably 10°C higher, than the above temperature of the reduction reaction. At less than 5°C, it may become difficult to obtain the composition based on the formula.

### The metal salt

Examples of metal salts (such as platinum-containing metal salts, gold-containing metal salts, and iron-containing metal salts) employed in the synthesis of the magnetic nanoparticle of the present invention are H₂PtCl₆, K₂PtCl₄, Na₂PtCl₄, PtCl₄, Pt(CH₃COCHCOCH₃)₂, Na₂PdCl₄, Pd(OCOCH₃)₂, PdCl₂, Pd(CH₃COCHCOCH₃)₂, KAuCl₄, HAuCl₄, NaAuCl₄, AuCl₃, Au(CH₃COCHCOCH₃)₃, Fe₂(SO₄)₃, Fe(NO₃)₃, (NH₄)₃Fe(C₂O₄)₃, Fe(CH₃COCHCOCH₃)₃, Fe(OC₂H₅)₃, (CH₃COO)₂Fe, FeCl₃, and FeCl₂. In the course of synthesizing the magnetic nanoparticles, these metal salts can be dissolved in a solvent for use in reactions. The concentration of the solution is preferably from 0.1 to 1,000 micromole/mL, more preferably from 1 to 100 micromole/mL.

Following the synthesis of magnetic nanoparticles, the salts are preferably removed from the solution to enhance the dispersion stability of the particles and inhibit change in the osmotic pressure of the blood to which the aqueous colloid composition is administered. Examples of desalting methods are the addition of an excess quantity of alcohol or the like to induce light aggregation and the use of natural precipitation or centrifugal precipitation to remove salts with the supernatant; dialysis; ultrafiltration; and gel filtration. The method that is best suited to the synthesis method may be adopted.

Transmission electron microscopy (TEM) may be employed to evaluate the particle size of the magnetic nanoparticles of the present invention. X-ray diffraction or electron beam diffraction based on TEM may be employed to determine the crystal system of the magnetic nanoparticles. EDAX may be employed in FE-TEM that is capable of fine electron beam focusing in analysis of the internal composition of the magnetic nanoparticles. XAFS and STEM/EDS may be employed in ligand structure analysis. Further, the magnetic properties of the magnetic nanoparticles may be evaluated with a VSM.

### Si compounds and Ti compounds

Compounds having the partial structure presented by general formula [I] below and their decomposition products can be employed as surface modifying agents of the magnetic nanoparticles. The use of such surface modifying agents improves the dispersibility of the magnetic nanoparticles in water and in electrolytic solutions, facilitating the binding to molecular probes in the detection of target compounds.

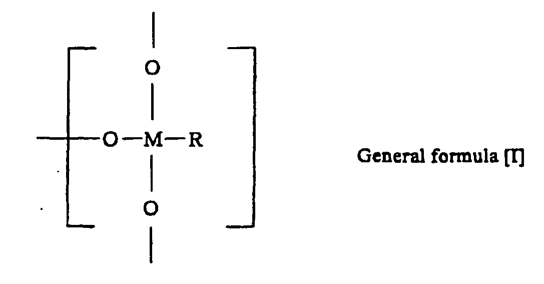

In the formula, M represents an Si or Ti atom, O represents an oxygen atom, and R represents an organic group having reactivity with a molecular probe.

Examples of the group having reactivity with a molecular probe that is presented by R are groups having a terminal vinyl group, allyloxy group, acryloyl group, methacryloyl group, isocyanate group, formyl group, epoxy group, maleimide group, amino group, carboxyl group, halogen or the like through a linking group L. R is prerferably a group having a terminal amino group. The amino group, carboxyl group, or the like may be in the form of a salt with an acid or base.

Examples of linking group L are alkylene groups (such as methylene groups, ethylene groups, trimethylene groups, tetramethylene groups, hexamethylene groups, propylene groups, ethylethylene groups, cyclohexylene groups, and other groups having 1 to 10 carbon atoms, preferably chainlike or cyclic groups having 1 to 8 carbon atoms); alkenylene groups (such as vinylene groups, propenylene groups, 1-butenylene groups, 2-butenylene groups, 2-pentenylene groups, 8-hexadecenylene groups, 1,3-butanedienylene groups, cyclohexenylene groups, and other groups having 1 to 10 carbon atoms, preferably chainlike or cyclic groups having 1 to 8 carbon atoms); and arylene groups (such as phenylene groups, naphthylene groups, and other groups having 6 to 10 carbon atoms, preferably phenylene groups having 6 carbon atoms).

Linking group L may comprise one or more hetero atoms (meaning atoms other than carbon atoms, such as nitrogen atoms, oxygen atoms, and sulfur atoms). Oxygen atoms and sulfur atoms are preferable, and oxygen atoms are more preferable as the hetero atoms. The number of hetero atoms is not specifically limited, but five or fewer are preferable and three or fewer are more preferable.

Linking group L may comprise a partial structure in the form of a functional group containing the above hetero atoms and the carbon atoms adjacent to these hetero atoms. Examples of the functional group include ester groups (including carboxylic acid esters, carbonic acid esters, sulfonic acid esters, and sulfinic acid esters); amide groups (including carboxamides, urethane, sulfamides, sulfonamides, and sulfinamides); ethers; thioethers; disulfides, amino groups, and imido groups. These functional groups may optionally have substituents. Two or more of the functional groups may be present on each L. When two or more functional groups are present, they may be the same or different.

Preferable functional groups are ester groups, amido groups, ether groups, thioether groups, disulfide groups, and amino groups. Ester groups, and ether groups are preferred.

In addition to above-described M, examples of groups binding to oxygen atoms include hydrogen atoms, alkyl groups (preferably methyl groups, ethyl groups, isopropyl groups, n-propyl groups, t-butyl groups, and n-butyl groups) and phenyl groups. These alkyl groups and phenyl groups may optionally have substituents. A preferable example of a group binding to oxygen atoms is a group having a total of eight or fewer carbon atoms.

Examples of the decomposition products of compounds having the partial structure represented by general formula [I] are hydroxides obtained by hydrolysis of alkoxy groups; low-molecular-weight oligomers produced by dehydration condensation reactions between hydroxyl groups (these may be linear, cyclic, crosslinked, or the like in structure); dealcoholation condensation reaction products of hydroxyl groups and unhydrolyzed alkoxy groups; and gels and sols formed when these groups undergo dehydration condensation reactions.

The Si compound and Ti compound employed in the present invention can be synthesized using a silane coupling agent and titanium coupling agent as starting materials. Specific examples of starting materials are given below, but are not limited to the examples given:
N-(2-aminoethyl)-3-aminopropylmethyldimethoxysilane, N-(2-aminoethyl)-3-aminopropyltrimethoxysilane, N-(2-aminoethyl)-3-aminopropyltriethoxysilane, 3-aminopropyltrimethyoxysilane, aminophenyltrimethoxysilane, 3-aminopropyltriethoxysilane, bis(trimethoxysilylpropyl)amine, N-(3-aminopropyl)-benzamidotrimethoxysilane, 3-hydrazidopropyltrimethoxysilane, 3-maleiimidopropyltrimethoxysilane, (p-carboxy)phenyltrimethoxysilane, 3-carboxypropyltrimethoxysilane, 3-aminopropyltitaniumtripropoxide, 3-aminopropylmethoxyethyltitaniumdiethoxide, 3-carboxypropyltitaniumtrimethoxide.

The terminal amino group or carboxyl group of the Si compound or Ti compound employed in the present invention may form a salt with an acid or base. Further, various receptors having accumulation specificity for abnormal cells such as tumor cells can be bonded to a terminal amino group or carboxyl group to impart functions as treatment agents. Examples of such receptors include various monoclonal antibodies, various proteins, peptides, steroids, and immune-related agents (such as immunocyte activating materials). The imparting of functions to Si compounds and Ti compounds is, for example, beneficial to the diagnosis and thermotherapy of tumors, and can bring killer cells inducing effect.

Si compounds or Ti compounds may cover the entire surface of the magnetic nanoparticles, or only a portion thereof, and may be used singly or in combinations of two or more. The above Si compounds and Ti compounds are preferred to be added following synthesis of the magnetic nanoparticles, and bonded to and coated on the magnetic nanoparticles by a hydrolytic reaction. The Si compounds and Ti compounds are employed in a quantity of preferably 10 to 200 weight percent, more preferably 20 to 150 weight percent, of the magnetic nanoparticles.

The magnetic nanoparticle-containing aqueous colloid composition of the present invention may contain a nonionic surfactant (sorbitan fatty acid ester-based, polyoxyethylene sorbitan fatty acid ester-based, polyoxyethylene sorbitol fatty acid ester-based, glycerin-polyglycerin fatty acid ester and acetic acid ester-based, based on the ethylene oxide derivative of a glycerin-propylene glycol fatty acid ester, polyethylene glycol fatty acid ester-based, polyoxyethylene alkyl ether-based, polyoxyethylene castor oil-hardened castor oil derivative-based, or the like). It is also possible to impart functions as therapeutic agents by bonding the above-described receptors having accumulation specificity for abnormal cells such as tumor cells to water-soluble polymer compounds such as sugar alcohols and polysaccharides.

### Sugar alcohol compounds

The magnetic nanoparticle-containing aqueous colloid composition of the present invention may contain a sugar alcohol compound. Incorporating a sugar alcohol compound into the aqueous colloid composition permits more stable dispersion of the magnetic nanoparticle of the present invention in aqueous solvents, facilitating the regulation of osmotic pressure. Examples of sugar alcohol compounds include erythritols (tetrahydric alcohols) such as D-erythritol, L-erythritol, and mesoerythritol; pentitols (pentahydric alcohols) such as D-arabitol, L-arabitol, adonitol, and xylitol ; and hexitols (hexahydric alcohols) such as D-sorbitol, L-sorbitol, D-mannitol, L-mannitol, D-iditol, L-iditol, dulcitol, D-talitol, L-talitol, and allitol. The concentration of the sugar alcohol compound in the aqueous colloidal composition is preferably 1 to 100 mg/mL.

### Monosaccharides and polysaccharides

The magnetic nanoparticle-containing aqueous colloid composition of the present invention may contain a monosaccharide or polysaccharide. Incorporating a monosaccharide or polysaccharide into the aqueous colloid composition of the present invention permits more stable dispersion of the magnetic nanoparticle of the present invention in aqueous solvents, is safe when the magnetic nanoparticle of the present invention is injected as an imaging agent, for example, into the bloodstream, and tends not to undergo precipitous aggregation in the bloodstream. The monosaccharide may be an aldose (aldehyde alcohol) or ketose (ketone alcohol). Examples of aldoses include aldotetroses such as D- and L-threose and D- and L-erythrose; aldopentoses such as D- and L-arabinose, D- and L-lyxose, D- and L-ribose, and D- and L-xylose; and aldohexoses such as D- and L-glucose, D- and L-gulase, D- and L-mannose, D- and L-idose, D- and L-galactose, D- and L-talose, D- and L-altrose, and D- and L-allose. Examples of ketoses include ketotrioses such as dihydroxyacetone; ketotetroses such as D-erythrulose; ketopentoses such as D-ribulose and D-xylulose; and ketohexoses such as D-psicose, D-fructose, D-sorbose, and D-tagatose.

Examples of polysaccharides include neutral polysaccharides, acid polysaccharides, and basic polysaccharides. Examples of neutral polysaccharides include glucose polymers in the form of dextran, starch, dextrin, glycogen, cellulose, pullulan, cardran, schizophyllan, lentinan, pestalotian, and alkali products and carboxyalkyl derivatives of the same; fructose polymers in the form of inulin, levan, and the like; mannose polymers in the form of mannan; galactose polymers in the form of agarose, galactan, and arabinogalactan; xylose polymers in the form of xylan; and L-arabinose polymers in the form of arabinan. Examples of basic polysaccharides include glucosamine polymers such as chitin. Examples of acid polysaccharides include alginic acid, pentin, hyaluric acid, chondroitin-4-sulfate, sialic acid, neuraminic acid, and dextransulfonic acid. The polysaccharides may be oligosaccharides such as disaccharides, trisaccharides, and tetrasaccharides, or polymer compounds.

From the perspective of the stability and absolute viscosity of the aqueous colloid composition, the number average molecular weight of the monosaccharides and polysaccharides may be from about 500 to about 300,000, preferably from about 1,000 to about 100,000, and most preferably from about 1,500 to about 30,000. The concentration of the monosaccharides and polysaccharides in the aqueous colloid composition may be from 1 to 300 mg/mL, preferably from 10 to 100 mg/mL.

The absolute viscosity of the aqueous colloid composition is a physical value that affects handling properties and heat-generating efficiency in thermotherapy. The absolute viscosity of the magnetic nanoparticle-containing aqueous colloid composition of the present invention is not specifically limited, and falls generally within a range of from 1 to 50,000 mPa · s (= CP (centipoise)), preferably within a range of 2 to 10,000 mPa · s, and more preferably within 3 to 2,000 mPa · s.

The content of iron alloy in the aqueous colloid composition can be varied according to the intended use. For example, when being employed as an MRI imaging agent, the iron alloy content may be 0.05 to 20 weight/volume percent, preferably 0.1 to 10 weight/volume percent. When employed as an X-ray imaging agent, it may be 1 to 50 weight/volume percent, preferably 2 to 30 weight/volume percent. When employed as a thermotherapy formulation, it may be 0.1 to 20 weight/volume percent, preferably 0.2 to 10 weight/volume percent.

When employing the aqueous colloid composition containing the magnetic nanoparticles as an imaging agent, such as an MRI imaging agent or X-ray imaging agent, or as a formulation for thermotherapy, non-oral administration such as intravenous administration may normally be employed. However, oral administration may also be employed. Examples of solvents employed in manufacturing non-orally administered formulations, such as injections, and suspending agents include water, propylene glycol, polyethylene glycol, benzyl alcohol, ethyl oleate, and lecithin. An MRI imaging agent, X-ray imaging agent, or formulation for thermotherapy can be orally administered in the form of a granule, fine grain, powder, tablet, hard syrup, soft capsule, syrup, emulsion, suspension, liposome, liquid, or the like. Examples of excipients that can be employed when manufacturing solid formulations include lactose, sucrose, starch, talc, cellulose, dextrin, kaolin, and calcium carbonate. Liquid formulations for oral administration such as emulsions, syrups, suspensions, liquids may include commonly employed inert diluents such as vegetable oils. In addition to inert diluents, liquid formulations may incorporate aiding agents such as moisturizing agents, suspension adjuvants, sweeteners, aromatic agents, coloring agents, preservatives, and the like. Liquid formulations may be contained in capsules of absorbable materials, such as gelatins.

When employing the aqueous colloid composition containing the magnetic nanoparticle as an imaging agent, such as an MRI imaging agent or X-ray imaging agent, or as a formulation for thermotherapy, pharmaceutically active drugs such as carcinostatic agents may be admixed as needed. The composition of the present invention containing a carcinostatic agent exhibits an combined effect of thermotherapy and chemotherapy, and can be reasonably anticipated to have a good antitumor effect. Carcinostatic agents may be added in ratios falling within a relatively broad range by referencing conventional administration methods. Generally, a range of about 0.01 to about 10 weight percent, preferably about 0.1 to about 5 weight percent, of the entire composition may be adopted.

### Examples

The present invention is described in more detail below through examples. However, the scope of the present invention is not limited by the examples set forth below.

### (Reference Example 1)

### 1. Preparation of Fe·Pt alloy magnetic nanoparticle aqueous colloid composition

A 0.23 g quantity of iron (II) acetate, 0.40 g of platinum (II) acetylacetonate, 0.37 g of oleic acid, 0.70 g of oleylamine, 0.78 g of 1,2-hexadecanediol, and 40 mL of dioctyl ether were admixed and dissolved. Subsequently, an autoclave was employed to heat the mixture for 30 minutes at 270°C in high-purity argon gas. After cooling, the mixture was mixed with 120 mL of ethanol solution containing 0.88 g of dissolved 11-mercaptoundecanoic acid. The precipitate was recovered by centrifugal separation and washed with ethanol. To the precipitate were added 0.8 mL of 1N-NaOH aqueous solution and 20 mL of water to obtain a dispersion. The dispersion was then filtered with a 0.2 micrometer filter to prepare an aqueous colloid composition.

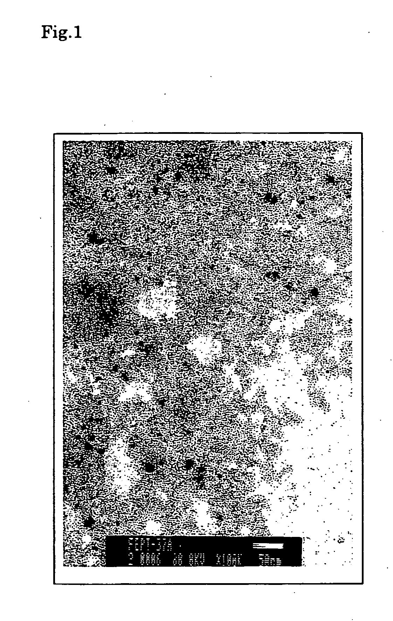

The aqueous colloid composition was placed on a mesh for TEM observation and dried to prepare a TEM sample. Examination of the particle size by transmission electron microscopy (TEM) at an acceleration voltage of 150 KV revealed that the aqueous colloid composition contained particles with a mean particle size of about 2 nm. Fig. 1 shows a TEM photograph. Further, electron beam diffraction measurement and XAFS were employed to confirm the formation of Fe-Pt alloy and the presence of iron oxide. The elemental ratio of Fe to Pt was determined to be about 1:1 by ICP measurement. This analysis revealed that nanoparticles comprised of a platinum-rich Fe·Pt alloy core coated with iron oxide had been produced.

D-mannitol was added to the aqueous colloid to prepare an aqueous colloid composition comprising 0.56 mg of Fe, 2.00 mg of Pt, and 1.5 mg of D-mannitol per milliliter.

### 2. Evaluation of magnetic properties

Magnetic properties were measured at an applied magnetic field of 796 KA/m with a high-sensitivity magnetization vector measuring apparatus and a DATA processor, both manufactured by Toei Industries. The coercivity was measured at room temperature (25 °C) by using a vibrating sample magnetometer manufactured by Toei Industries. The sample for the measurement was prepared by adding dropwise the above aqueous colloid composition on an about 9 millimeter square paper and dried the paper. The sample was then dissolved in a solution of HNOs and HCl (the volume ratio 1:3), and the quantity of the iron in the solution was determined, which was then used for the calculation of the saturation magnetization. A saturation magnetization of 75 A · m²/kg Fe and a coercivity of 9.5 KA/m were obtained.

### 3. Evaluation of cytotoxicity

The above-described aqueous colloid composition was intravenously administered to rats at a dose of 4 mL/kg. The rats survived for three days without exhibiting abnormalities. Subsequent autopsy revealed that the Fe-Pt alloy magnetic nanoparticles had accumulated in the liver and spleen.

### 4. MRI imaging test

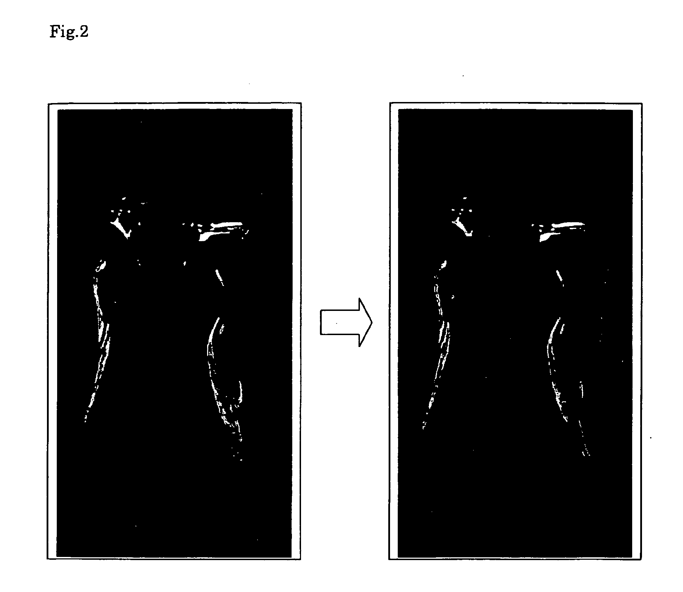

The above-described aqueous colloid composition was intravenously administered to rats at a dose of 0.8 mL/kg and MRI was conducted. Fig. 2 shows images prior to administration and 20 minutes after administration. Fig. 2 reveals that clear imaging of the liver and the like was possible.

### 5. X-ray imaging test

The above-described aqueous colloid composition was concentrated 20-fold, administered intravenously to rats at a dose of 4 mL/kg, and X-ray imaging was conducted, producing a good imaging effect.

### 6. Evaluation of heat-generating properties

When an alternating magnetic field of 150 kHz and 150 Oe was applied for 20 minutes by the method described on page 163 of the Synopsis of the 29th Science Lecture Conference of the Japan Society of Applied Magnetism (2005) to the aqueous colloid composition employed in the above-described MRI imaging test, the solution temperature rose 9.1°C. Further, the temperature of an aqueous solution (comparative solution) that did not contain magnetic nanoparticles underwent almost no change.

### (Reference Example 2)

Aqueous colloid compositions were prepared by replacing the D-mannitol of Reference Example 1 with dextran (average molecular weight of 15,000 to 20,000) and adding an equal quantity of glucose. These aqueous colloid compositions were determined to permit MRI and X-ray imaging, and heat was generated by applying an alternating magnetic field, in the same manner as in Example 1.

### (Reference Example 3)

### 1. Preparation of Pt·Au alloy nanoparticle aqueous colloid composition

A 1.20 g quantity of iron (II) chloride tetrahydrate and 1.86 g of potassium gold (III) chloride dihydrate were dissolved in 50 mL of ethylene glycol in high-purity argon gas. To this solution was admixed a solution of 2.04 g of sodium ethoxide and 8.4 mL of oleylamine dissolved in 25 mL of ethylene glycol. Subsequently, the mixed solution was heated to 130°C and stirred for 6 hours. The mixture was then cooled to room temperature and added to 150 mL of toluene solution containing 2.74 g of dissolved 11-mercaptoundecanoic acid. The precipitate was recovered by centrifugal separation and washed with ethanol. To the precipitate were added 1.6 mL of 1N-NaOH aqueous solution and 20 mL of water to obtain a dispersion. The dispersion was then filtered with a 0.2 micrometer filter to prepare an aqueous colloid composition.

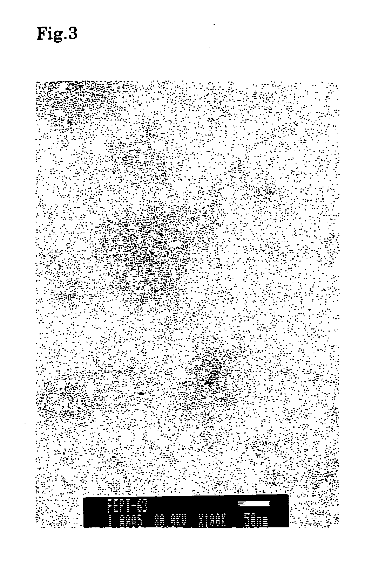

TEM observation of this aqueous colloid composition revealed that particles with a mean particle size of about 4 nm had been formed. Fig. 3 shows a TEM photograph. XAFS was employed to confirm the formation of Fe-Au alloy and the presence of iron oxide. The elemental ratio of Fe to Au was determined to be about 1:1 by ICP measurement. This analysis revealed that nanoparticles comprised of a gold-rich Fe-Au alloy core coated with iron oxide had been produced.

D-fructose was added to the aqueous colloid to prepare an aqueous colloid composition comprising 1.4 mg of Fe, 5.2 mg of Au, and 4 mg of D-fructose per milliliter.

### 2. Evaluation

Evaluation of the magnetic properties of the above aqueous colloid composition in the same manner as in Reference Example 1 revealed a saturation magnetization of 90 A · m²/kgFe and a coercivity of 8.0 KA/m. This aqueous colloid composition was determined to permit MRI and X-ray imaging, and heat was generated by applying an alternating magnetic field, in the same manner as in Reference Example 1.

### (Comparative Example 1)

When the autoclave heating conditions were set to 30 minutes at 310°C in the preparation of the Fe-Pt alloy nanoparticle aqueous colloid composition of Reference Example 1, the mean particle size of the Fe-Pt alloy nanoparticles become 8 nm and the dispersion stability of the aqueous colloid deteriorated markedly. X-ray diffraction revealed a partial fct Fe-Pt crystalline structure. Examination of magnetic properties revealed a saturation magnetization of 120 A · m²/kgFe and a coercivity of 51.7 KA/m. The increase in coercivity was considered to have caused the particles to easily aggregate.

### (Reference Example 4)

### 1. Preparation of Pt-containing iron oxide nanoparticle dispersion

A 0.82 g quantity of ammonium iron (III) oxalate trihydrate and 0.79 g of potassium platinum (II) chloride were dissolved in 68 mL of water, a solution of 23 g of Aerosil OT (AOT) dissolved in 225 mL of decane was added, and the mixture was stirred for 10 minutes with a three-one motor (solution A). A 1.13 g quantity of sodium boron hydride was dissolved in 85 mL of water, a solution of 29 g of Aerosil OT (AOT) dissolved in 280 mL of decane was added, and the mixture was stirred for 10 minutes with a three-one motor (solution B). Solution B was added to solution A and the mixture was stirred for 5 minutes at room temperature. The temperature was then raised to 40°C and the mixture was stirred for one hour.

After cooling, 700 mL of methanol added with 1.7 g of 11-mercaptoundecanoic acid and 700 mL of water were added. The mixture was stirred and then left standing, causing two phases to separate out. The lower phase was discarded, 700 mL of ethanol was added, and centrifugal separation was conducted, resulting in precipitation. The supernatant was removed. The precipitate was washed with ethanol. The precipitate was then dispersed in 1 mL of 1N-NaOH solution and 20 mL of an aqueous solution of 0.5 weight percent dextran (molecular weight 15,000 to 25,000), yielding an aqueous colloid composition. The aqueous colloid composition obtained did not precipitate even when admixed with physiological saline.

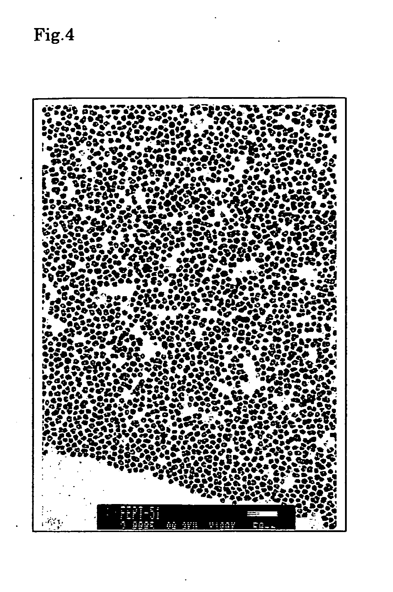

The aqueous colloid composition was placed on a mesh for TEM observation and dried to prepare a TEM sample. Examination of the particle size with a transmission electron microscope (TEM) manufactured by Hitachi, Ltd. at an acceleration voltage of 150 KV revealed that the aqueous colloid composition contained nanoparticles with a mean particle size of about 9 nm. Fig. 4 shows a TEM photograph. An elemental ratio of Fe to Pt of about 1:1 was determined by ICP measurement. Further, X-ray diffraction pattern and XAFS structural analysis revealed that amorphous iron oxide was covering a platinum core. The composition of the aqueous colloid composition prepared was as follows: Pt: 3.5 mg/mL; iron oxide: 0.9 mg/mL as Fe; platinum content: 53 atomic percent; dextran: 5 mg/mL.

### 2. Evaluation of magnetic properties

The magnetic properties of the magnetic nanoparticles were measured at an applied magnetic field of 796 KA/m with a high-sensitivity magnetization vector measuring apparatus (VSM) and a DATA processor, both manufactured by Toei Industries. The coercivity was measured at room temperature (25 °C) by using a vibrating sample magnetometer manufactured by Toei Industries. The sample for the measurement was prepared by adding dropwise the above aqueous colloid composition on an about 9 millimeter square paper and dried the paper. The sample was then dissolved in a solution ofHNOs and HCl (the volume ratio 1:3), and the quantity of the iron in the solution was determined, which was then used for the calculation of the saturation magnetization. A saturation magnetization of 120 A · m²/kg Fe and a coercivity of 4.8 KA/m were obtained.

### 3. Evaluation of cytotoxicity

The above-described aqueous colloid composition was intravenously administered to rats at a dose of 2 mL/kg. The rats survived for three days without exhibiting abnormalities. Subsequent autopsy revealed accumulation in the liver.

### 4. MRI imaging test

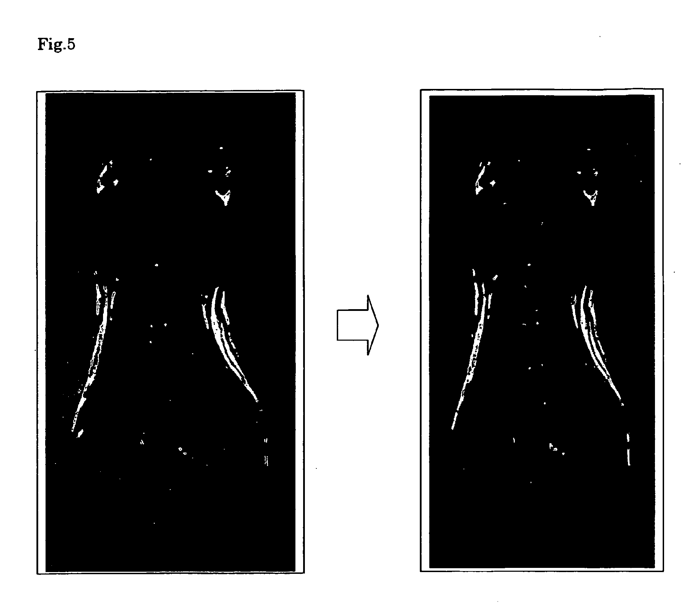

The above-described aqueous colloid composition was intravenously administered to rats at a dose of 0.5 mL/kg and MRI was conducted. Fig. 5 shows images prior to administration and 20 minutes after administration. Fig. 5 reveals that clear imaging of the liver and the like was possible.

### 5. X-ray imaging test

The above-described aqueous colloid composition was concentrated 20-fold, administered intravenously to rats at a dose of 2 mL/kg, and X-ray imaging was conducted, producing a good imaging effect.

### 6. Evaluation of heat-generating properties

When an alternating magnetic field of 150 kHz and 150 Oe was applied for 20 minutes by the method described on page 163 of the Synopsis of the 29th Science Lecture Conference of the Japan Society of Applied Magnetism (2005) to the above aqueous colloid of alloy magnetic nanoparticles, the solution temperature rose 13.3°C.

### (Reference Example 5)

An aqueous colloid composition (composition: Au: 3.6 mg/mL, iron oxide: 1.0 g as iron; gold content: 50 atomic percent; dextran: 5 mg/mL) containing magnetic nanoparticles (average particle size: 10 nm; saturation magnetization: 110 A · m²/kgFe; coercivity: 75 Oe) having gold cores was obtained by the same operation as in that in Reference Example 4 with the exception that an equal weight of potassium gold (III) chloride was employed in place of potassium platinum (II) chloride. This aqueous colloid was found to permit MRI imaging, and to permit X-ray imaging when concentrated 20-fold, in the same manner as in Reference Example 4. In the evaluation of heat-generating properties, the solution temperature rose 12.1°C when an alternating magnetic field of 150 kHz and 11.9 KA/m was applied for 20 minutes.

### (Example 6)

A 0.82 g quantity of ammonium iron (III) oxalate trihydrate and 0.79 g of potassium platinum (II) chloride were dissolved in 68 mL of water, a solution of 23 g of Aerosil OT (AOT) dissolved in 225 mL of decane was added, and the mixture was stirred for 10 minutes with a three-one motor (solution A). A 1.13 g quantity of sodium boron hydride was dissolved in 85 mL of water, a solution of 29 g of Aerosil OT (AOT) dissolved in 280 mL of decane was added, and the mixture was stirred for 10 minutes with a three-one motor (solution B). Solution B was added to solution A and the mixture was stirred for 5 minutes at room temperature. Subsequently, the temperature was raised to 40°C and the mixture was stirred for one hour. A 700 mL quantity of methanol and 700 mL of water were then added. The mixture was stirred and then left standing, separating into two phases. The lower phase was discarded, 1 mL of 3-aminopropyltrimethoxysilane was added, and the mixture was stirred for 4 hours at 60°C.

After cooling, the precipitate was separated out by filtration, washed with ethanol, and then dispersed in 20 mL of an aqueous solution of 0.5 weight percent dextran (molecular weight: 15,000 to 25,000), yielding an aqueous colloid composition. The aqueous colloid composition obtained was stable and did not precipitate even when admixed with physiological saline.

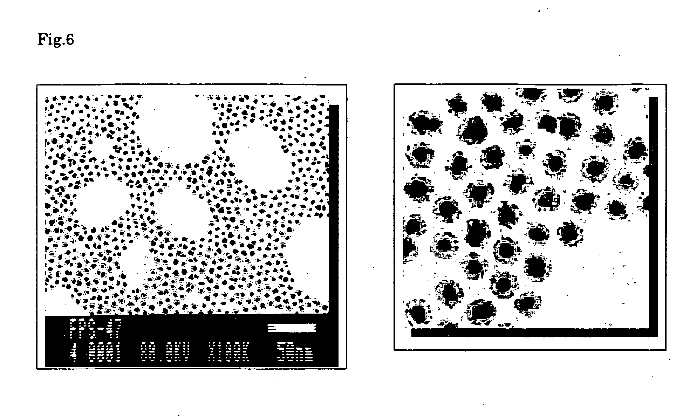

The aqueous colloid composition thus prepared was placed on a mesh for TEM observation and dried to prepare a TEM sample. Examination of the particle size with a transmission electron microscope (TEM) manufactured by Hitachi, Ltd. at an acceleration voltage of 150 KV revealed that the aqueous colloid composition contained nanoparticles with a mean particle size of about 11 nm. Fig. 6 shows TEM photographs. An elemental ratio of Fe to Pt of about 1:1 was determined by ICP measurement. Further, X-ray diffraction pattern and XAFS structural analysis revealed that amorphous iron oxide and silica compounds were covering a platinum core.

The composition of the aqueous colloid composition prepared was as follows: Pt: 3.5 mg/mL; iron oxide: 0.9 mg/mL as Fe; platinum content: 53 atomic percent; Si: 6.2 mg/mL; dextran: 5 mg/mL.

The nanoparticles had the following magnetic properties: a saturation magnetization of 104 A - m²/kgFe and a coercivity of 3.8 KA/m.

This aqueous colloid was found to permit MRI imaging, and to permit X-ray imaging when concentrated 20-fold, in the same manner as in Example 4. In the evaluation of heat-generating properties, the solution temperature rose 12.9°C when an alternating magnetic field of 150 kHz and 150 Oe was applied for 20 minutes.

### (Comparative Example 2)

Pt-containing magnetic nanoparticles having a mean particle size of 25 nm were synthesized by the same operation as in Example 4 with the exception that 1.8-fold the quantity of water was employed during reverse micelle synthesis. When an attempt was made to prepare an aqueous colloid composition by the same method as that in Example 4, the particles aggregated and an aqueous colloid composition could not be prepared. Evaluation of the magnetic properties of the magnetic nanoparticles by VSM revealed a saturation magnetization of 114 A. m²/kgFe and a coercivity of 34.2 KA/m. The increase in particle size was considered to have caused a change to hard magnetism, resulting in aggregation of particles.

### (Comparative Example 3)

Iron oxide magnetic nanoparticles and an aqueous colloid composition were prepared by the same operations as in Example 4 with the exception that no potassium platinum (II) chloride was added. The mean particle size of the magnetic nanoparticles obtained was 10 nm. The composition of the aqueous colloid composition was: iron oxide: 1.0 mg/mL (as Fe) and dextran: 5 mg/mL. The magnetic properties were as follows: a saturation magnetization of 70 A. m²/kgFe and a coercivity of 3.3 KA/m. This aqueous colloid composition was administered to rats in a dose of 2 mL/kg, but did not exhibit cytotoxicity. MRI imaging and X-ray imaging tests were conducted, but the signal intensities were lower than those in the test wherein the compositions of Example 4 were used.

### Industrial Applicability

The magnetic nanoparticle of the present invention affords good stability in water or an electrolytic aqueous solution such as blood and is highly safe. The magnetic nanoparticle of the present invention is useful as an imaging agent and as a formulation for thermotherapy.

## Claims

1. An aqueous colloid composition comprising a magnetic nanoparticle which comprises an iron alloy in addition to iron oxide, or platinum and/or gold in addition to iron oxide, having a mean particle size of not less than 1 nm and not greater than 20 nm and a coercivity of not less than 0.001 KA/m and not greater than 16 KA/m, wherein at least one portion of the surface of which is coated with a compound having the partial structure represented by the following general formula [I], or a decomposition product thereof: 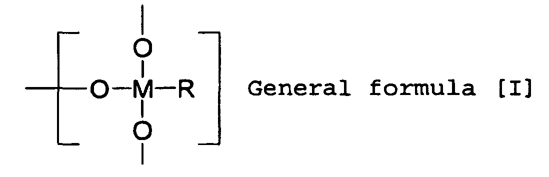 wherein M represents an Si or Ti atom and R represents an organic group having reactivity with a molecular probe.

2. The aqueous colloid composition according to claim 1, wherein the magnetic nanoparticle comprises an iron alloy, having a mean particle size of not less than 1 nm and less than 5 nm.

3. The aqueous colloid composition according to claim 2, wherein said metal alloy is an alloy comprised of Fe-Pt or Fe-Au.

4. The aqueous colloid composition according to claim 2 or claim 3, wherein at least a portion of the surface of said iron alloy is covered with iron oxide.

5. The aqueous colloid composition according to claim 1, wherein the magnetic nanoparticle comprises platinum and/or gold in addition to iron oxide, having a mean particle size of not less than 5 nm and not greater than 20 nm.

6. The aqueous colloid composition according to claim 5, wherein said platinum and/or gold forms a core, and said core is covered with iron oxide.

7. The aqueous colloid composition according to claim 5 or claim 6, wherein the content ratio of the platinum and gold relative to the total quantity of platinum, gold, and iron is from 5 to 70 atomic percent.

8. The aqueous colloid composition according to claim 7, wherein said content ratio is from 30 to 60 atomic percent.

9. The aqueous colloid composition according to any one of claims 1 to 8, wherein the magnetic nanoparticle has a saturation magnetization per kilogram of iron of not less than 10 A·m²/kg and not greater than 200 A·m²/kg.

10. The aqueous colloid composition according to any one of claims 1 to 9, wherein a mercapto compound is adsorbed to at least a portion of the magnetic nanoparticle surface.

11. The aqueous colloid composition according to claim 10, wherein said mercapto compound comprises a group selected from the group consisting of amino groups, carboxyl groups, and hydroxyl groups.

12. The aqueous colloid composition according to any one of claims 1 to 11, which comprises a sugar alcohol compound.

13. The aqueous colloid composition according to any one of claims 1 to 12, which comprises a monosaccharide or polysaccharide.

14. An imaging agent which comprises the aqueous colloid composition according to any one of claims 1 to 13.

15. A formulation for thermotherapy which comprises the aqueous colloid composition according to any one of claims 1 to 13.

16. A method of manufacturing an aqueous colloid composition according to claim 2 or 5 which comprises sequentially the following steps:
(i) heating a nonaqueous solution containing a metal salt forming an iron alloy and a reducing agent to not lower than 100°C and not higher than 350°C to produce an oil-based colloid of magnetic nanoparticles containing iron alloy and having a mean particle size of not less than 1 nm and less than 5 nm; or
forming magnetic nanoparticles having a mean particle size of not less than 5 nm and not greater than 20 nm from a reverse micelle comprised of a platinum-containing metal salt and/or a gold-containing metal salt, an iron-containing metal salt, and a reducing agent;
(ii) coating at least a portion of the surface of said magnetic nanoparticles with a compound having the partial structure represented by the following general formula [I]: 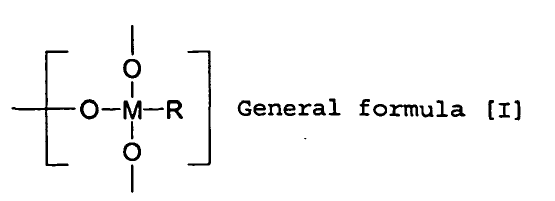 wherein M represents a Si or Ti atom and R represents an organic group having reactivity with a molecular probe, or a decomposition product thereof; and
(iii) dispersing said magnetic nanoparticles in water.

## Patentansprüche

1. Wässrige Kolloidzusammensetzung, umfassend einen magnetischen Nanopartikel, der eine Eisenlegierung zusätzlich zu Eisenoxid, oder Platin und/oder Gold zusätzlich zu Eisenoxid, umfasst, der eine mittlere Partikelgröße von nicht kleiner als 1 nm und nicht größer als 20 nm und eine Koerzivität von nicht kleiner als 0,001 KA/m und nicht größer als 16 KA/m aufweist, worin mindestens ein Teil der Oberfläche hiervon mit einer Verbindung mit einer durch die allgemeine Formel [I] dargestellten Teilstruktur oder einem Zersetzungsprodukt hiervon beschichtet ist: 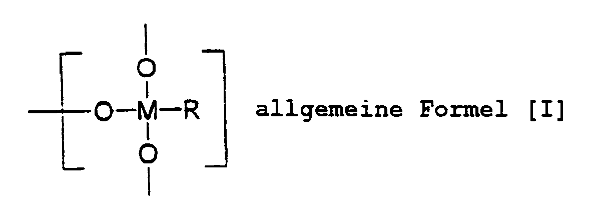 worin M ein Si- oder Ti-Atom darstellt und R eine organische Gruppe darstellt, die Reaktivität mit einer molekularen Probe aufweist.

2. Wässrige Kolloidzusammensetzung gemäß Anspruch 1, worin der magnetische Nanopartikel eine Eisenlegierung umfasst, eine mittlere Partikelgröße von nicht kleiner als 1 nm und weniger als 5 nm aufweist.

3. Wässrige Kolloidzusammensetzung gemäß Anspruch 2, worin die Metalllegierung eine Legierung ist, die Fe-Pt oder Fe-Au umfasst.

4. Wässrige Kolloidzusammensetzung gemäß Anspruch 2 oder Anspruch 3, worin mindestens ein Teil der Oberfläche der Eisenlegierung mit Eisenoxid bedeckt ist.

5. Wässrige Kolloidzusammensetzung gemäß Anspruch 1, worin der magnetische Nanopartikel Platin und/oder Gold zusätzlich zu Eisenoxid umfasst und eine mittlere Partikelgröße von nicht kleiner als 5 nm und nicht größer als 20 nm aufweist.

6. Wässrige Kolloidzusammensetzung gemäß Anspruch 5, worin das Platin und/oder Gold einen Kern bildet und der Kern mit Eisenoxid bedeckt ist.

7. Wässrige Kolloidzusammensetzung gemäß Anspruch 5 oder Anspruch 6, worin der Mengenanteil von Platin und Gold, relativ zur Gesamtmenge von Platin, Gold und Eisen, 5 bis 70 Atom% beträgt.

8. Wässrige Kolloidzusammensetzung gemäß Anspruch 7, worin der Mengenanteil 30 bis 60 Atom% beträgt.

9. Wässrige Kolloidzusammensetzung gemäß irgendeinem der Ansprüche 1 bis 8, worin der magnetische Nanopartikel eine Sättigungsmagnetisierung je Kilogramm Eisen von nicht weniger als 10 A·m²/kg und nicht größer als 200 A·m²/kg aufweist.

10. Wässrige Kolloidzusammensetzung gemäß irgendeinem der Ansprüche 1 bis 9, worin eine Mercaptoverbindung an mindestens einen Teil der Oberfläche des magnetischen Nanopartikels adsorbiert ist.

11. Wässrige Kolloidzusammensetzung gemäß Anspruch 10, worin die Mercaptoverbindung eine Gruppe umfasst, die ausgewählt ist aus der Gruppe bestehend aus Aminogruppen, Carboxylgruppen und Hydroxylgruppen.

12. Wässrige Kolloidzusammensetzung gemäß irgendeinem der Ansprüche 1 bis 11, die eine Zuckeralkoholverbindung umfasst.

13. Wässrige Kolloidzusammensetzung gemäß irgendeinem der Ansprüche 1 bis 12, die ein Monosaccharid oder Polysaccharid umfasst.

14. Bebilderungsmittel, welches die wässrige Kolloidzusammensetzung gemäß irgendeinem der Ansprüche 1 bis 13 umfasst.

15. Formulierung für Thermotherapie, die die wässrige Kolloidzusammensetzung gemäß irgendeinem der Ansprüche 1 bis 13 umfasst.

16. Verfahren zur Herstellung einer wässrigen Kolloidzusammensetzung gemäß Anspruch 2 oder 5, welches aufeinanderfolgend die folgenden Schritte umfasst:
(i) Erwärmen einer nicht-wässrigen Lösung, die ein Metallsalz, das eine Eisenlegierung bildet, und ein Reduktionsmittel enthält, auf nicht niedriger als 100°C und nicht höher als 350°C, um ein ölbasiertes Kolloid von magnetischen Nanopartikeln, die eine Eisenlegierung enthalten und eine mittlere Partikelgröße von nicht kleiner als 1 nm und kleiner als 5 nm aufweisen, herzustellen; oder
Bilden von magnetischen Nanopartikeln mit einer mittleren Partikelgröße von nicht kleiner als 5 nm und nicht größer als 20 nm aus einer reversen Micelle, die ein platinhaltiges Metallsalz und/oder ein goldhaltiges Metallsalz, ein eisenhaltiges Metallsalz und ein Reduktionsmittel umfasst;
(ii) Beschichten von mindestens einem Teil der Oberfläche der magnetischen Nanopartikel mit einer Verbindung, die eine durch die folgende allgemeine Formel [I] dargestellte Teilstruktur aufweist: 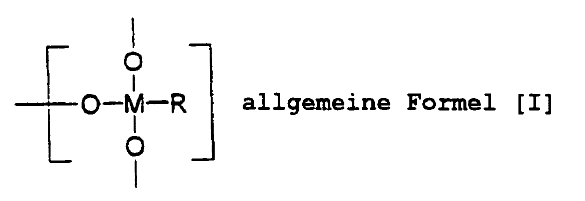 worin M ein Si- oder Ti-Atom darstellt und R eine organische Gruppe darstellt, die Reaktivität mit einer molekularen Probe aufweist, oder mit einem Zersetzungsprodukt hiervon; und
(iii) Dispergieren der magnetisches Nanopartikel in Wasser.

## Revendications

1. Composition aqueuse de colloïde comprenant une nanoparticule magnétique qui comprend un alliage de fer en plus de l'oxyde de fer, ou du platine et/ou de l'or en plus de l'oxyde de fer, présentant une taille moyenne de particule qui n'est pas inférieure à 1 nm et qui n'est pas supérieure à 20 nm et une coercivité qui n'est pas inférieure à 0,001 KA/m et qui n'est pas supérieure à 16 KA/m, dans laquelle au moins une partie de la surface est revêtue avec un composé présentant la structure partielle représentée par la formule générale [I] suivante, ou un produit de décomposition de celui-ci : 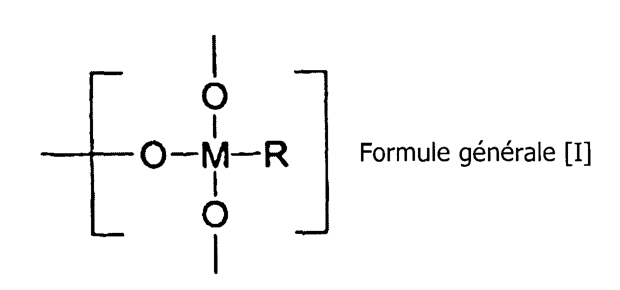 dans laquelle M représente un atome de Si ou de Ti et R représente un groupe organique présentant une réactivité avec une sonde moléculaire.

2. Composition aqueuse de colloïde selon la revendication 1, dans laquelle la nanoparticule magnétique comprend un alliage de fer, présentant une taille moyenne de particule qui n'est pas inférieure à 1 nm et qui est inférieure à 5 nm.

3. Composition aqueuse de colloïde selon la revendication 2, dans laquelle ledit alliage de métal est un alliage constitué de Fe-Pt ou de Fe-Au.

4. Composition aqueuse de colloïde selon la revendication 2 ou la revendication 3, dans laquelle au moins une partie de la surface dudit alliage de fer est recouverte avec de l'oxyde de fer.

5. Composition aqueuse de colloïde selon la revendication 1, dans laquelle la nanoparticule magnétique comprend du platine et/ou de l'or en plus de l'oxyde de fer, présentant une taille moyenne de particule qui n'est pas inférieure à 5 nm et qui n'est pas supérieure à 20 nm.

6. Composition aqueuse de colloïde selon la revendication 5, dans laquelle ledit platine et/ou or forme un noyau, et ledit noyau est recouvert avec de l'oxyde de fer.

7. Composition aqueuse de colloïde selon la revendication 5 ou la revendication 6, dans laquelle le rapport de teneur du platine et de l'or par rapport à la quantité totale de platine, d'or et de fer est de 5 à 70 pourcents atomiques.

8. Composition aqueuse de colloïde selon la revendication 7, dans laquelle ledit rapport de teneur est de 30 à 60 pourcents atomiques.

9. Composition aqueuse de colloïde selon l'une quelconque des revendications 1 à 8, dans laquelle la nanoparticule magnétique présente une magnétisation de saturation par kilogramme de fer qui n'est pas inférieure à 10 A.m²/kg et qui n'est pas supérieure à 200 A.m²/kg.

10. Composition aqueuse de colloïde selon l'une quelconque des revendications 1 à 9, dans laquelle un composé mercapto est adsorbé sur au moins une partie de la surface de nanoparticule magnétique.

11. Composition aqueuse de colloïde selon la revendication 10, dans laquelle ledit composé mercapto comprend un groupe choisi dans le groupe constitué de groupes amino, de groupes carboxyle, et de groupes hydroxyle.

12. Composition aqueuse de colloïde selon l'une quelconque des revendications 1 à 11, laquelle comprend un composé d'alcool de sucre.

13. Composition aqueuse de colloïde selon l'une quelconque des revendications 1 à 12, laquelle comprend un monosaccharide ou un polysaccharide.

14. Agent de formation d'image qui comprend la composition aqueuse de colloïde selon l'une quelconque des revendications 1 à 13.

15. Formulation pour thermothérapie qui comprend la composition aqueuse de colloïde selon l'une quelconque des revendications 1 à 13.

16. Procédé de fabrication d'une composition aqueuse de colloïde selon la revendication 2 ou 5 qui comprend successivement les étapes suivantes :
(i) de chauffage d'une solution non aqueuse contenant un sel métallique formant un alliage de fer et un agent réducteur à une température qui n'est pas inférieure à 100°C et qui n'est pas supérieure à 350°C pour produire un colloïde à base d'huile de nanoparticules magnétiques contenant un alliage de fer et présentant une taille moyenne de particule qui n'est pas inférieure à 1 nm et qui est inférieure à 5 nm ; ou
de formation de nanoparticules magnétiques présentant une taille moyenne de particule qui n'est pas inférieure à 5 nm et qui n'est pas supérieure à 20 nm à partir d'une micelle inverse constituée d'un sel de métal contenant du platine et/ou d'un sel de métal contenant de l'or, d'un sel de métal contenant du fer, et d'un agent réducteur ;
(ii) de revêtement d'au moins une partie de la surface desdites nanoparticules magnétiques avec un composé présentant la structure partielle représentée par la formule générale [I] suivante : 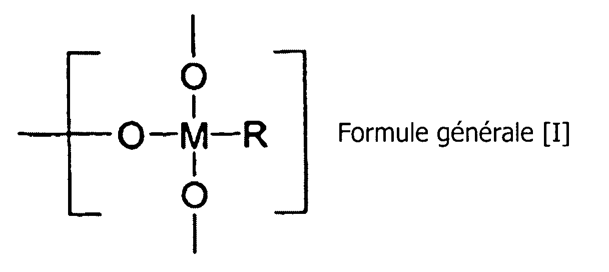 dans laquelle M représente un atome de Si ou de Ti et R représente un groupe organique présentant une réactivité avec une sonde moléculaire,
ou un produit de décomposition de celui-ci ; et
(iii) de dispersion desdites nanoparticules magnétiques dans de l'eau.
